# EUROPÄISCHE PATENTANMELDUNG

(11) **EP 1 914 098 A2**
(43) Veröffentlichungstag der Anmeldung: **23.04.2008**
(21) Anmeldenummer: 07017824.9
(22) Anmeldetag: 12.09.2007
(51) Int. Cl.: B60J 7/20

(54) **Cabriolet-Fahrzeug mit einem abwärts verlagerbaren hinteren Dachteil**

(30) Priorität: 19.10.2006 DE 102006049356
(71) Anmelder: Wilhelm Karmann GmbH, 49084 Osnabrück (DE)
(72) Erfinder: Brockhoff, Franz-Ulrich, 49565 Bramsche (DE)

(57) **Zusammenfassung**

Ein Cabriolet-Fahrzeug (1) mit einem eine Heckscheibe (5) umfassenden hinteren Dachteil (4), das während der Öffnungsbewegung des Daches (2) um zumindest eine - ggf. virtuelle - Achse (6) derart wendbar ist, dass die bei geschlossenem Dach (2) dem Innenraum (7) zugewandte Seite (8) der Heckscheibe (5) eine nach oben weisende Komponente aufweist, wird so ausgebildet, dass die Achse (6) während der Dachöffnung auf einer Bahnkurve (10) beweglich ist, die eine in Fahrtrichtung (F) nach vorne führende Komponente aufweist und die Achse (6) während der Bewegung aus der geschlossenen in die offene Dachstellung zunächst aufwärts und im weiteren wieder abwärts verlagert.

## Beschreibung

Die Erfindung betrifft ein Cabriolet-Fahrzeug mit einem eine Heckscheibe umfassenden hinteren Dachteil, das während der Öffnungsbewegung des Daches um zumindest eine - ggf. virtuelle - Achse wendbar ist, nach dem Oberbegriff des Anspruchs 1.

Es ist bekannt, das Dach eines Cabriolet-Fahrzeugs mit einem ein- oder mehrteiligen hinteren Dachteil, das eine Heckscheibe umfasst, und mit einem oder mehreren diesem vorgeordneten weiteren Dachteilen auszubilden. Die Dachteile sind insgesamt zur Dachöffnung in den Heckbereich der Fahrzeugkarosserie absenkbar. Häufig liegt dabei das hinterste Dachteil derart gewendet, dass es mit der bei geschlossenem Dach dem Insassenraum zugewandten Seite - horizontal oder zumindest schräg - nach oben zeigt. Während der Dachöffnungs- oder -schließbewegung taucht durch das Wenden die hintere Kante des hinteren Dachteils weit nach unten in die Karosserie ein, wodurch eine Kollisionsgefahr dieses Dachteils mit Teilen der Karosserie, insbesondere hinteren Radhäusern, Federbeindomen oder einer Leitung zur Tankbefüllung bestehen kann.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch ein Fahrzeug mit den Merkmalen des Anspruchs 8. Vorteilhafte Ausgestaltungen und Weiterbildungen der Erfindung sind in den weiteren Ansprüchen 2 bis 7 und 9 bis 12 angegeben.

Erfindungsgemäß ist in der Ausbildung nach Anspruch 1 eine Bahnkurve erreicht, auf der die Achse für das hintere Dachteil derart geführt sein kann, dass sie nicht unter ihre Stellung bei geschlossenem Dach absinkt. Damit ist eine Kollisionsgefahr mit tiefer liegenden Karosserieteilen bei der Dachbewegung ausgeschlossen. Mit der Anhebung und gleichzeitigen Vorwärtsbewegung der Achse ist auch eine Anhebung und Vorwärtsbewegung der hinteren Kante des hinteren Dachteils erreicht. Gleichzeitig ist durch die Vorwärtsverlagerung der Achse eine Packstellung ermöglicht, bei der das Dach besonders nah an eine zum Insassenraum abgrenzende Spritzwand herangerückt ist.

Wenn vorteilhaft die Erstreckung der Bahnkurve in Fahrtrichtung erheblich größer als ihre Höhenerstreckung ist, ist die Vorwärtsverlagerung besonders ausgeprägt.

Dabei kann insbesondere in jedem Moment der Dachöffnungsbewegung die Achse mit einer Komponente in Fahrtrichtung verlagerbar sein, wodurch sich eine kontinuierliche und einen gleichmäßigen Bewegungsablauf sichernde Verlagerung ergibt.

Besonders günstig ist der tiefste Punkt der Bahnkurve bei Endstellung des geöffneten Daches oder in deren Nahbereich erreicht. Damit muss in keiner Phase der Bewegung ein Teil des Daches unter diesen tiefsten, erst in Endstellung erreichten Punkt absinken. Die Kollisionsgefahr mit Teilen der Karosserie ist dadurch weiter vermindert.

Insbesondere kann die Bahnkurve ein Segment eines Kreisbogens beschreiben. Dadurch ist die Steuerung der Bewegung besonders einfach. Die Achse kann auf einem Schwenkhebel, der selbst nur mit einem Freiheitsgrad gegenüber der Karosserie schwenkbar gehalten ist, geführt werden.

Die Bahnkurve kann dabei nahezu vollständig oberhalb einer seitlichen Fensterbrüstungslinie der Karosserie - und somit besonders weit oben - verlaufen, so dass auch schwierigen geometrischen Bedingungen im Fahrzeug, etwa besonders hohen Benzineinfüllstutzen, Rechnung getragen werden kann.

Eine einfache Konstruktion sieht vor, dass die Achse zur Bewegung des hinteren Dachteils an einem gegenüber der Karosserie schwenkbeweglich gehaltenen Hebel gebildet ist. Für diesen Hebel reicht ein einziger Rotationsfreiheitsgrad.

In der Ausbildung nach Anspruch 8 ist durch das Abrollen von Kopfbereichen zweier Hebel eines Mehrgelenks aufeinander sichergestellt, mit der Bewegung des die Achse umfassenden Hebels nicht nur diese Achse insgesamt verlagert wird, sondern gleichzeitig und zwangsweise auch die Umwendung des hinteren Dachteils um diese Achse erfolgt.

Um eine Schlupffreiheit des Abrollens der Kopfenden von mehreren Hebeln sicherzustellen, sind diese vorteilhaft mit Verzahnungen versehen. Der die Achse tragende Hebel kann dann einen mit dem hinteren Dachteil fest verbunden Teil eines Zahnrads tragen, das um die Achse drehbar ist, während ein zweiter Hebel als Steuerhebel für die Umwendung wirken kann und hierfür an seinem Kopfbereich ein gegenüber diesem Steuerhebel unbewegliches Zahnrad aufweist.

Diese beiden Hebel können dann ein mechanisch einfaches und in der Funktion zuverlässiges Viergelenk bilden.

Besonders günstig ist, um diesem Viergelenk auch einen Durchtritt durch eine Totpunktlage ohne eine Unterbestimmung zu ermöglichen, ein Zusatzhebel zwischen dem Hauptlager der Karosserie und dem hinteren Dachteil vorgesehen. Damit ist von dem Mehrgelenk, das ansonsten nur als Viergelenk wirkt, ein großer Bewegungsbereich abdeckbar.

Weiterhin kann sehr günstig die gesamte Dachbewegung über die aufeinander abrollenden Kopfenden der beiden Hebel gesteuert und vermittelt werden, indem auch eine Relativbewegung eines vorgeordneten Dachteils gegenüber dem hinteren Dachteil durch im Seitenbereich des hinteren Dachteils gelegene aufragende Säulen vermittelbar ist. Diese können direkt durch Bewegung des hinteren Dachteils um seine Achse eindrehbar sein, zum Beispiel über Kreuzgelenke, und die Bewegung in eine Steuerung der Relativbewegung übersetzen.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

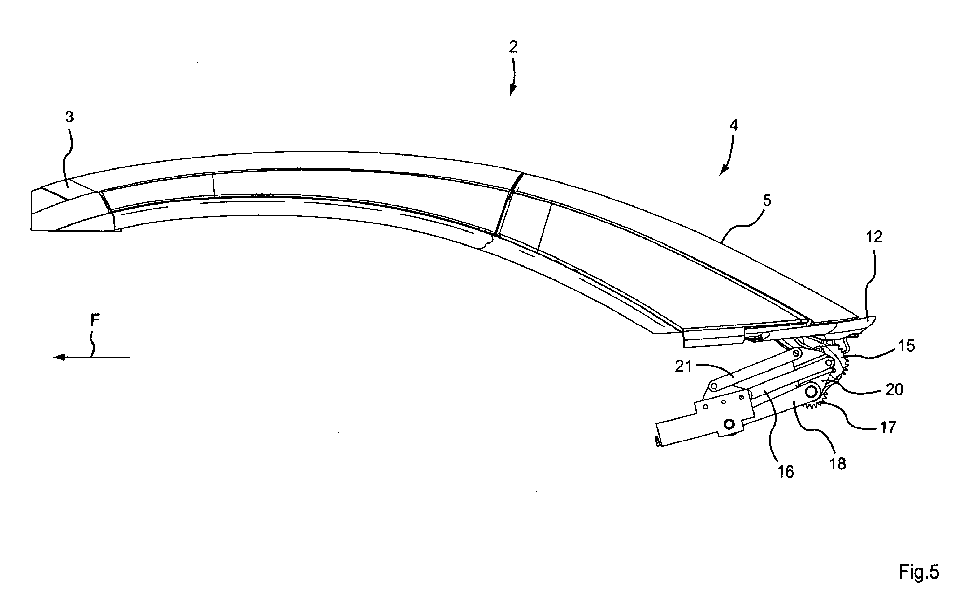

In der Zeichnung zeigt:
- Fig. 1: eine schematische, perspektivische und an der vertikalen Längsmittelebene sowie zum Fahrzeugbug und nach schräg unten abgebrochene Ansicht des hinteren und bzgl. der Fahrtrichtung linken Fahrzeugbereichs eines erfindungsgemäßen Cabriolet-Fahrzeugs bei geschlossenem Dach,
- Fig. 2: eine ähnliche Ansicht wie Fig. 1 bei beginnender Dachöffnung mit gleichzeitigem Aufwärt- und Vorwärtsverlagern sowie Umwenden des hinteren Dachteils,
- Fig. 3: eine ähnliche Ansicht wie Fig. 2 bei weiter fortschreitender Dachöffnung,
- Fig. 4: eine ähnliche Ansicht wie Fig. 3 bei vollständig im Heckbereich der Karosserie abgelegtem Dach,
- Fig. 5 bis Fig. 8: den Ablauf der Dachöffnung in einer von außen gesehenen Seitenansicht auf die bzgl. der Fahrtrichtung linke Seite des Daches,
darin
- Fig. 5: eine Ansicht bei geschlossenem Dach,

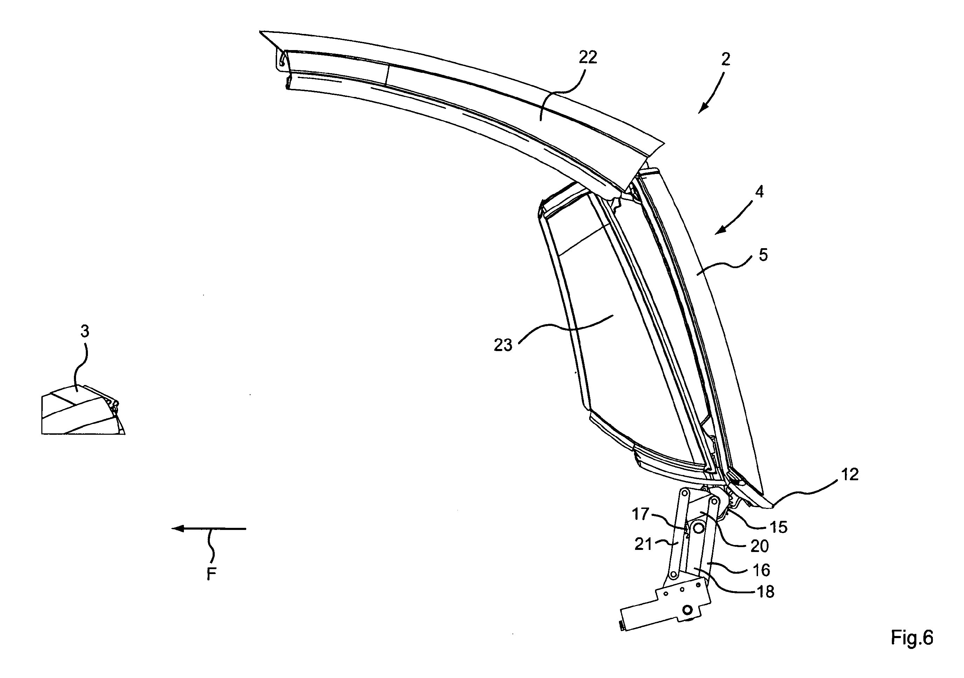

- Fig. 6: eine ähnliche Ansicht wie Fig. 5 bei beginnender Dachöffnung,

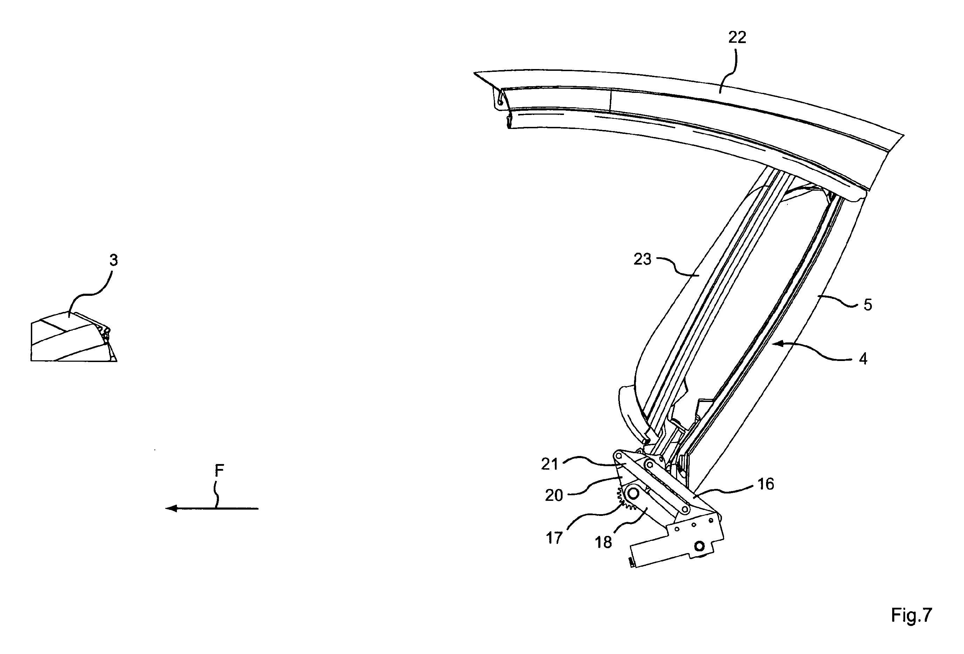

- Fig. 7: eine ähnliche Ansicht wie Fig. 6 bei weiter fortschreitender Dachöffnung,

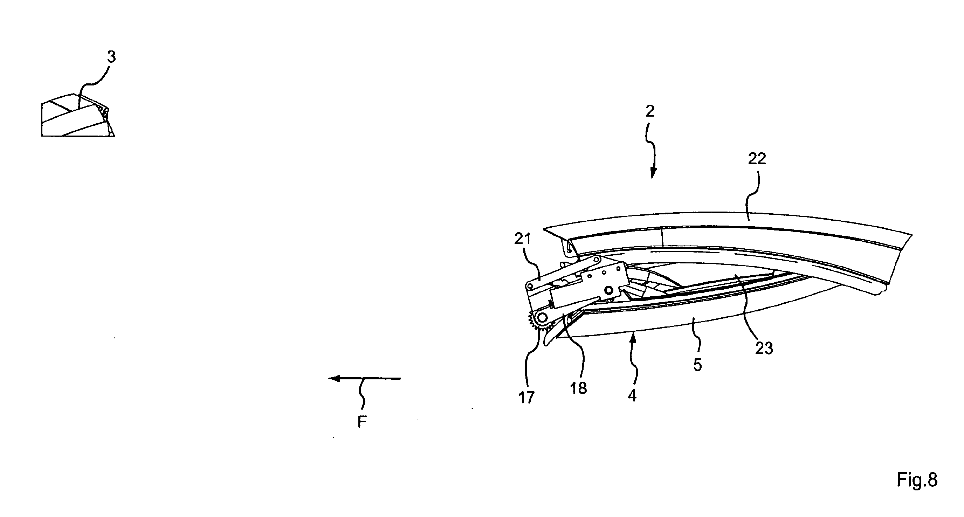

- Fig. 8: eine ähnliche Ansicht wie Fig. 7 bei vollständig abgelegtem Dach,

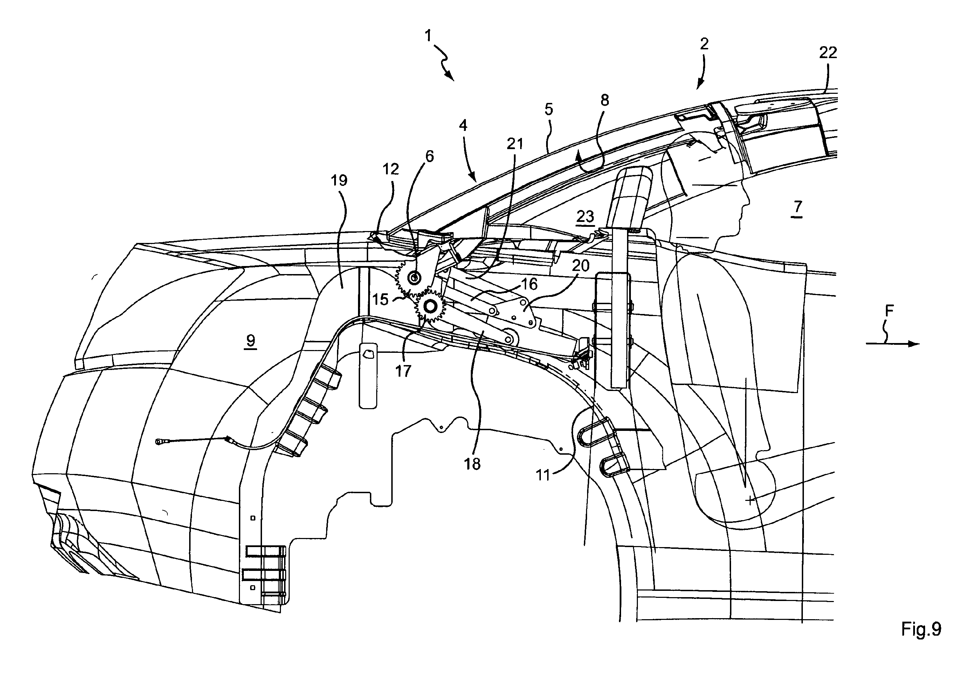

- Fig. 9: eine von innen nach außen gesehene Seitenansicht auf den linken Bereich eines nach vorne abgebrochenes Fahrzeugs bei geschlossenem Dach,

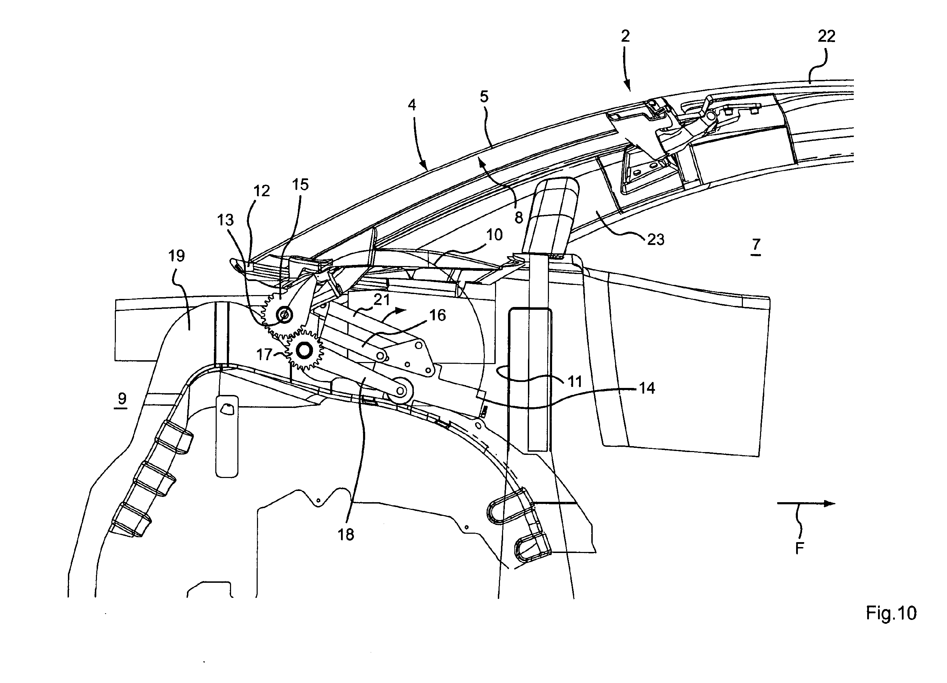

- Fig. 10 bis Fig. 15: den Ablauf der Dachöffnung aus der in Fig. 9 dargestellten Blickrichtung auf das Dach mit zusätzlich eingezeichneter Bahnkurve der Verlagerung der Achse, um die das hintere Dachteil umwendbar ist,
darin
- Fig. 10: eine Ansicht auf den hinteren Dachbereich bei geschlossenem Dach,

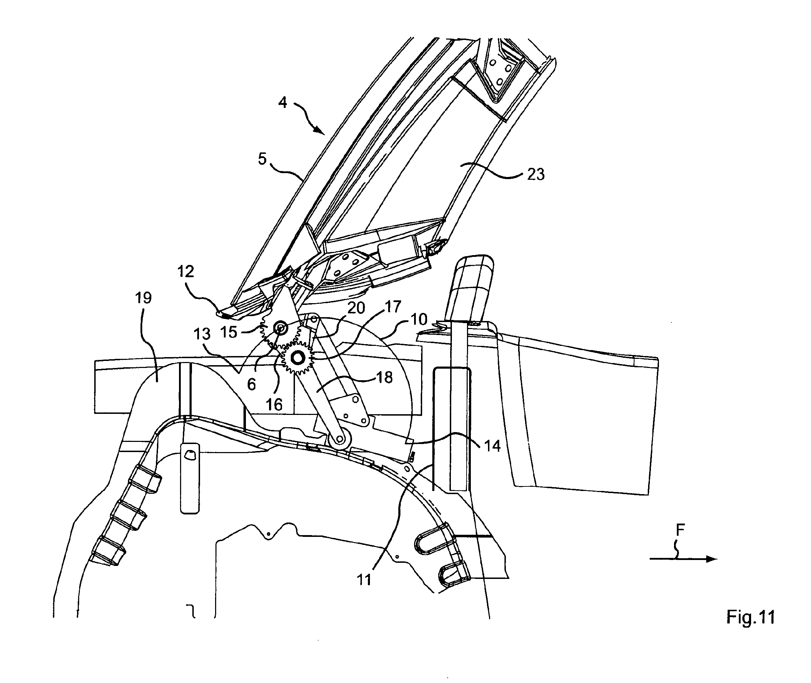

- Fig. 11: eine ähnliche Ansicht wie Fig. 10 bei beginnender Dachöffnung mit einer Totpunktlage der beiden Hebel, deren Kopfbereiche aufeinander abrollbar sind,

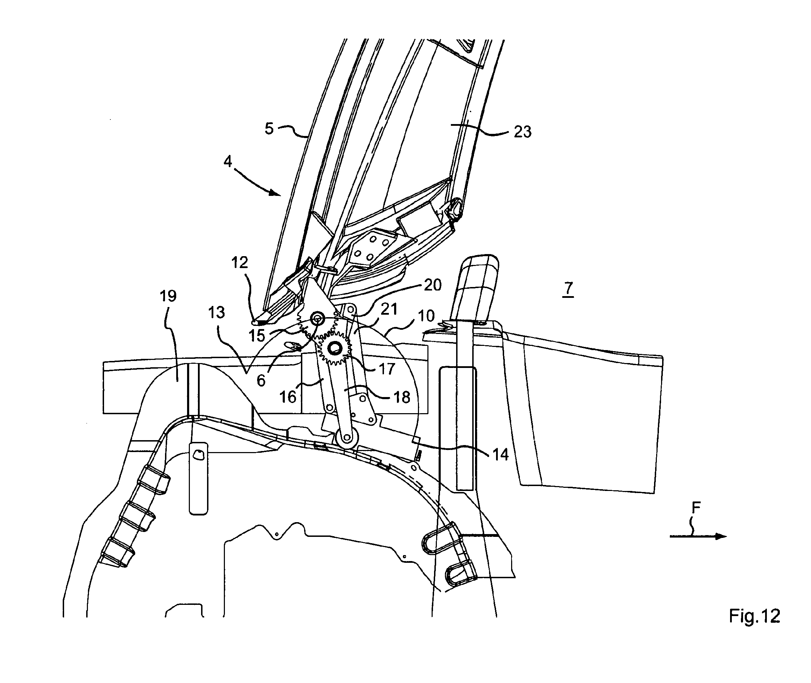

- Fig. 12: eine ähnliche Ansicht wie Fig. 11 bei weiter fortschreitender Dachöffnung,

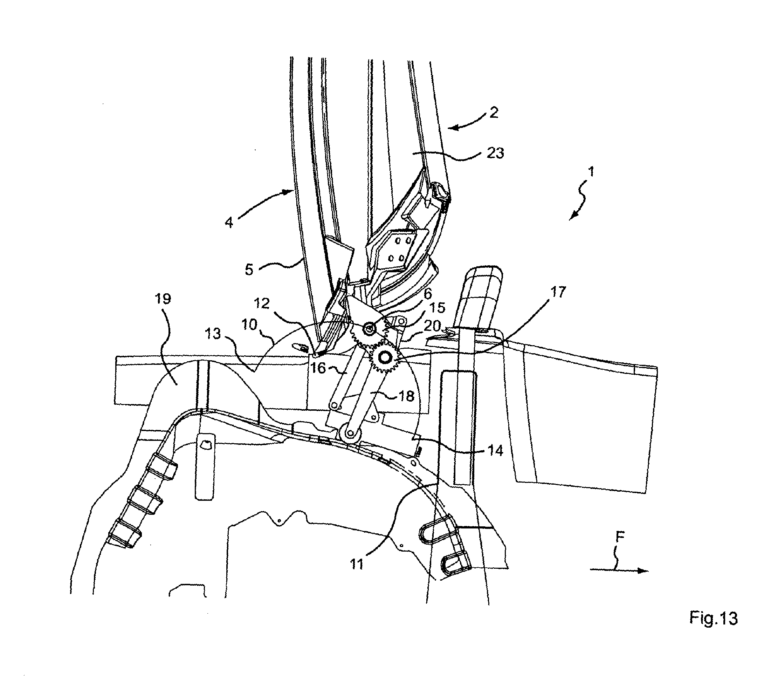

- Fig. 13: eine ähnliche Ansicht wie Fig. 12 bei weiter fortschreitender Dachöffnung,

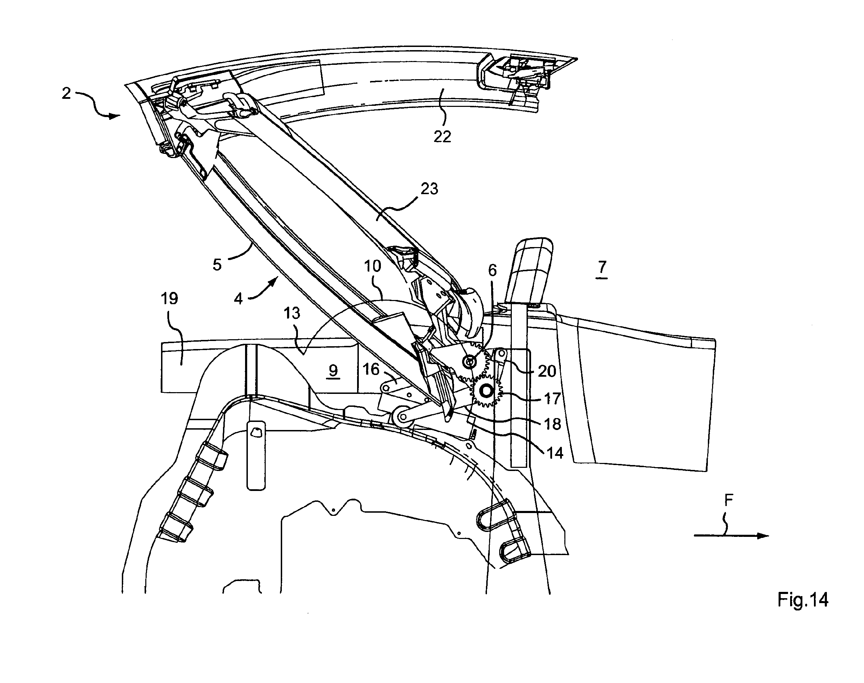

- Fig. 14: eine ähnliche Ansicht wie Fig. 13 bei weiter fortschreitender Dachöffnung und schon im wesentlichen gewendeten hinteren Dachteil,

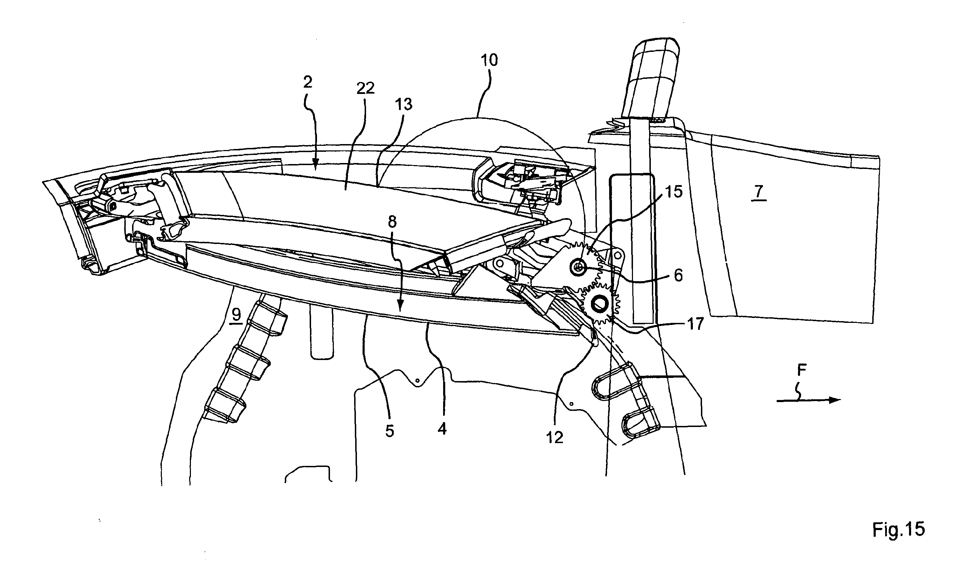

- Fig. 15: eine ähnliche Ansicht wie Fig. 14 bei vollständig abgelegtem Dach.

Das erfindungsgemäße Cabriolet-Fahrzeug 1 kann, wie im gezeichneten Ausführungsbeispiel angedeutet, sowohl ein mit zumindest einer Rückbank versehenes vier- oder mehrsitziges Fahrzeug als auch ein Zweisitzer sein. Die Anzahl der Dachteile des insgesamt mit 2 bezeichneten beweglichen Daches, das in geschlossener Stellung mittelbar oder unmittelbar an einen Windschutzscheibenrahmen 3 anschließt, ist hierfür je nach Innenraumlänge und Ablageraum vorzusehen.

In jedem Fall ist ein hinteres Dachteil 4 vorgesehen, das eine Heckscheibe 5 umfasst.

Die Dachteile können als separate und mit zumindest jeweils einem starren Rahmen versehene Baueinheiten ausgebildet sein oder auch ein insgesamt mit einem gemeinsamen Bezug überzogenes Soft-Top bilden. Insbesondere können in sich starre, plattenförmige Dachteile vorgesehen sein, wodurch ein sog. Retractable Hardtop (RHT) gebildet ist. Das Dach 2 kann manuell oder voll- oder teilautomatisch zu bewegen sein und ist zu seiner Öffnung im hinteren Fahrzeugbereich ablegbar.

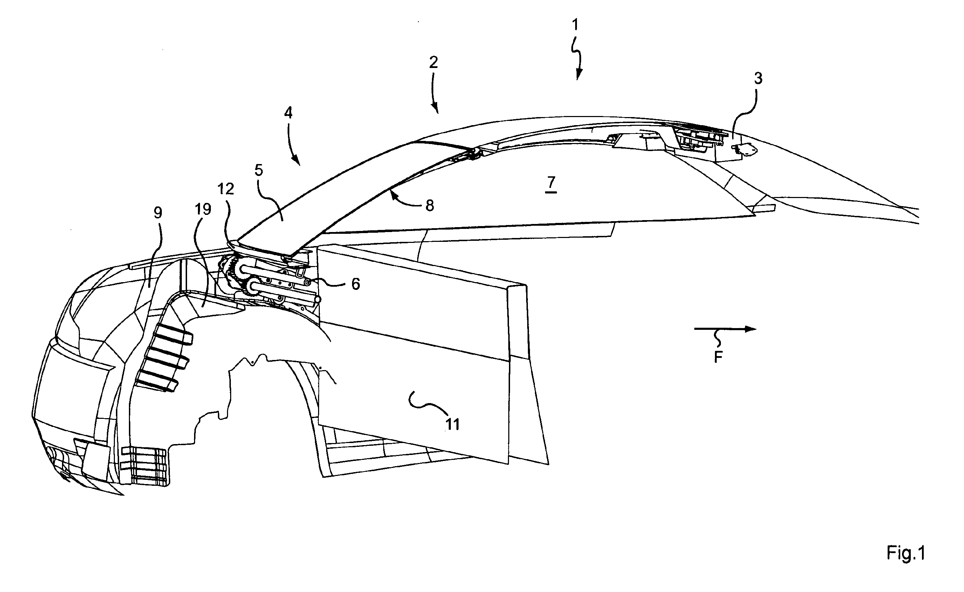

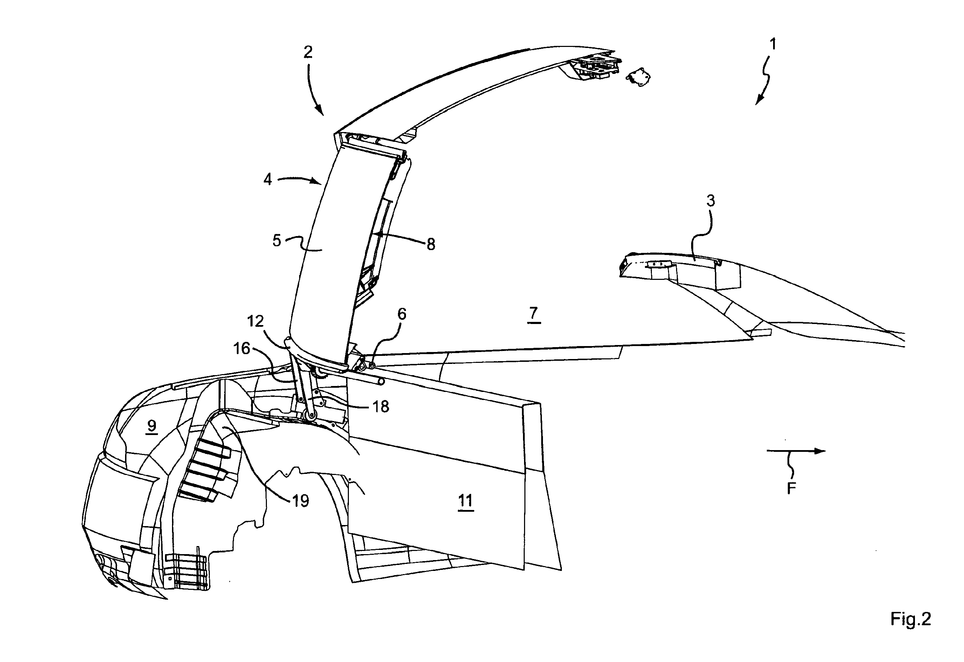

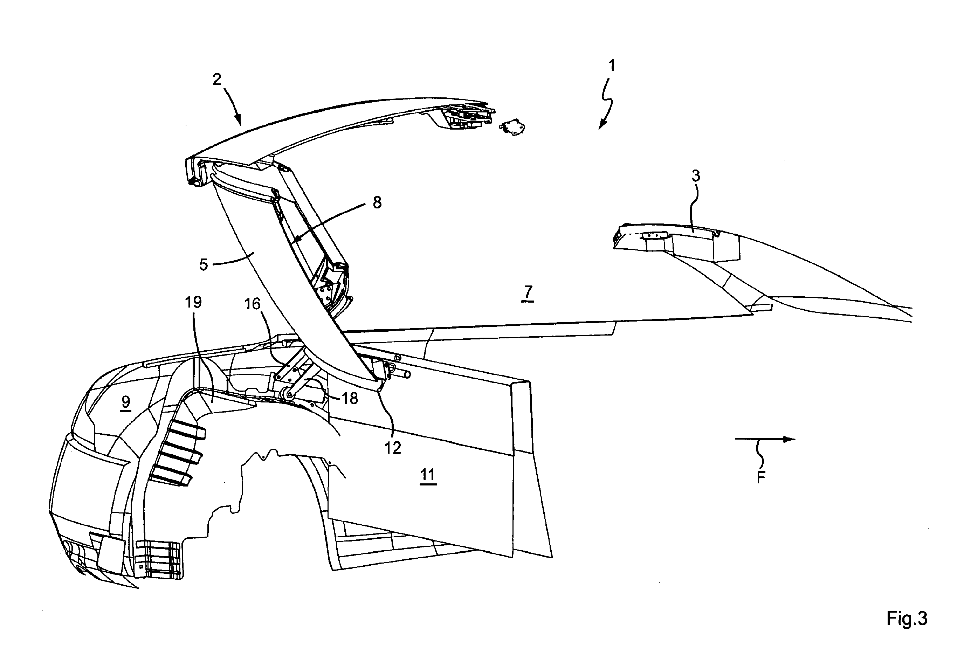

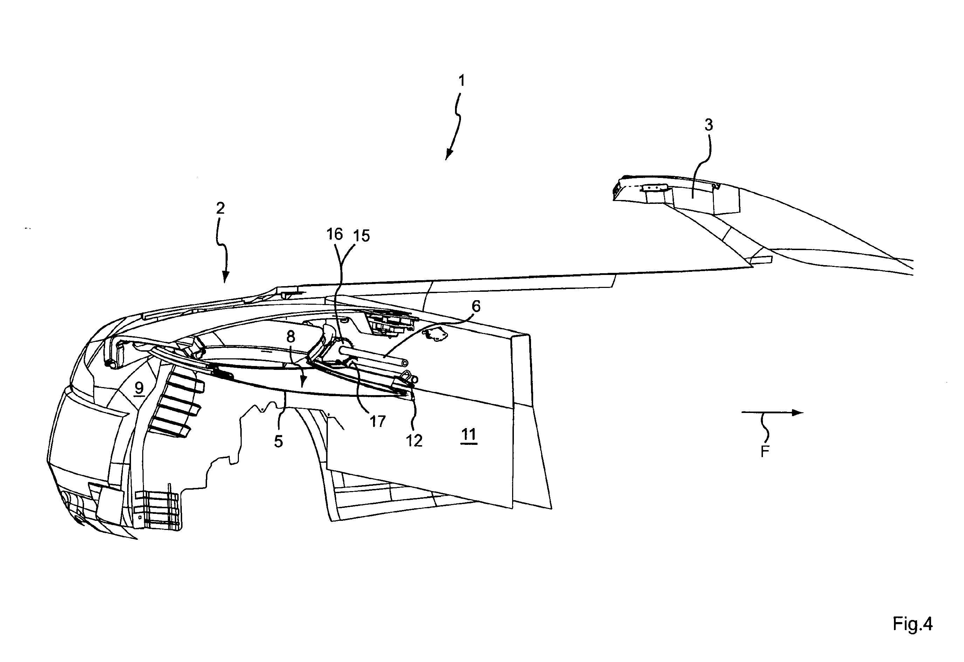

Das hintere Dachteil 4 wird während seiner Öffnung (Fig. 1 bis Fig. 4) zumindest so weit um eine Achse 6 umgewendet, dass ein Lot auf der bei geschlossenem Dach 2 dem Innenraum 7 zugewandten Seite 8 der Heckscheibe 5 eine nach oben weisende Komponente aufweist. Im gezeichneten Ausführungsbeispiel liegt die Heckscheibe 5 im geöffneten Dachzustand zumindest nahezu horizontal, was nicht zwingend ist.

Die Achse 6, um die das hintere Dachteil 4 gewendet wird, erstreckt sich quer zum Fahrzeug 1 und kann als reelle oder virtuelle Achse ausgebildet sein. Ihre Lage zur Karosserie 9 ist während der Dachbewegung nicht gleichbleibend, sondern sie wird während der Öffnung des Daches 2 auf der Bahnkurve 10 (Fig. 10 bis Fig. 15) in Fahrtrichtung F nach vorne und dabei zunächst aufwärts und im weiteren wieder abwärts verlagert.

Wie anhand des Öffnungsablaufs nach den genannten Figuren sichtbar wird, wird die Achse 6 für einen flüssigen Bewegungsablauf in jedem Moment der Dachöffnungsbewegung mit einer Komponente in Fahrtrichtung F verlagert, so dass insgesamt mit der Achse 6 das hintere Dachteil 4 und damit auch das gesamte Dach 2 trotz der "obenrum" laufenden Bahnkurve 10 während seiner Öffnung nach vorne und auch abwärts verlagert wird und dabei in eine eng an einer Spritzwand 11 zum Insassenraum herangerückte Packstellung gelangt. Insbesondere die bei geschlossenem Dach hintere und untere Dachkante 12 liegt dann platzsparend direkt vor dieser Spritzwand 11. Der Kofferraum ist dadurch optimiert. Hinter dem abgelegten Dach kann je nach Kofferraumlänge noch ein frei zu beladender Bereich verbleiben, bzw. das Heck kann für ein optisch vorteilhaftes Fahrzeugdesign gegenüber einer nicht oder nur wenig nach vorne verlagerten Achse 6 verkürzt werden. Der Verlagerungsweg der Achse 6 in Fahrtrichtung F während der Dachöffnung beträgt typisch 15 bis 30 Zentimeter.

Dieser Weg ist damit erheblich größer als eine Höhendifferenz zwischen dem Anfangspunkt 13 bei geschlossenem und dem Endpunkt 14 der Bahnkurve 10 bei geöffnetem Dach 2. Dennoch kann zwischenzeitlich durch die vom geschlossenen Dach zunächst erfolgende Anhebung die Achse 6 im Lauf der Bewegung auch erhebliche Höhenunterschiede durchlaufen.

Insbesondere kann die Bahnkurve 10 ein Segment eines Kreisbogens beschreiben, bei dem etwa ein Schwenkwinkel von 180° auf dieser Kurve durchlaufen wird. Hierfür ist die Achse 6 am ausgreifenden und gegenüber diesem drehbaren Kopfende 15 eines unten noch näher erläuterten Schwenkhebels 16 gebildet, der mit nur einem Freiheitsgrad um eine quer zur Fahrtrichtung F gelegene Achse gegenüber der Karosserie 9 schwenkbar sein kann. Die Länge des Schwenkhebels 16 bildet dann den Radius der Bahnkurve 10.

Der tiefste Punkt 14 der Bahnkurve 10 ist gemäß der Zeichnung bei Endstellung 14 des geöffneten Daches 2 oder ansonsten in deren Nahbereich erreicht (Fig. 15). In dieser Stellung befindet sich das Dach 2 in seiner am weitesten in die Karosserie 9 abgesenkten Position.

Dadurch, dass die Bahnkurve 10 zunächst vom Anfangspunkt 13 aufwärts verläuft, kann die Bahnkurve 10 über einen wesentlichen Teil ihrer Erstreckung sogar oberhalb einer seitlichen Fensterbrüstungslinie der Karosserie 9 verlaufen, wie zum Beispiel in den Figuren 11 bis 13 sichtbar ist. In jedem Fall ist eine Kollision von Dachbereichen, insbesondere der hinteren Dachkante 12, mit Teilen der Karosserie 9, zum Beispiel dem im Inneren aufragenden Radhaus 19, verhindert.

Das sofortige Anheben der hinteren Dachkante 12 aus ihrer geschlossenen Position heraus ermöglicht es auch, dass das Dach 2 insgesamt in Schließstellung auf einem hinteren Dekkelteil aufstehen kann und nicht wie ein übliches RHT das Deckelteil die hintere Dachkante übergreifen muss. Dadurch kann die Dachöffnung beschleunigt sein, weil nicht erst das Deckelteil öffnen muss vor Beginn der Dachbewegung. Zudem ist die Dichtungssituation bei einem Aufstehen des Daches 2 auf dem Deckelteil vereinfacht.

Unabhängig von der konkreten Ausgestaltung der Bahnkurve 10, aber insbesondere auch für deren beschriebene Ausbildung als Kreissegmentbogen eines ungefähr oberen Halbkreises kann die bewegbare Schwenkachse 6 an einem karosserieseitig beweglich gehaltenen Hebel 16 gebildet sein.

Dieser ist hier Teil eines Mehrgelenks mit zumindest einem zweiten beweglich an der Karosserie 9 gehaltenen Hebel 18. Beide Hebel 16, 18 mit ihren der karosserieseitigen Anlenkung abgewandten Kopfenden 15, 17 aufeinander abrollen, ohne dass es hierbei zu Schlupf käme.

Um diese schlupffreie Bewegung zuverlässig zu ermöglichen, sind zumindest die den beiden Hebeln 16, 18 zugeordneten Kopfenden 15, 17 jeweils mit einer Verzahnung versehen. Die Zuordnung ist dabei unterschiedlich an beiden Hebeln 16, 18: Das Kopfende 15 dreht zusammen mit dem hinteren Dachteil 4, an dem es fest angeordnet ist, um die Achse 6 gegenüber dem Hebel 16. Der Kopfbereich 17 ist hingegen gegenüber dem zweiten Hebel 18 unbeweglich. Der fest mit dem Hebel 18 zu bewegende Kopfbereich bildet daher über Eingriff mit dem fest zum Dachteil 4 gehörigen Kopfbereich 15 die Steuerung für das Verschwenken des hinteren Dachteils 4 um die Achse 6, wohingegen die Verlagerung dieser Achse auf der Bahnkurve 10 vom Hebel 16 bewirkt ist.

Die beiden Hebel 16, 18 bilden ein Viergelenk aus, wobei die Kopfenden 15, 17 über einen Dreieckslenker 20 (Fig. 5 bis Fig. 8) miteinander verbunden sind.

An diesem greift ein Zusatzhebel 21 an, der einerseits an der Karosserie an einer zu den Anlenkungen der Hebel 16 und 18 parallelen Schwenkachse drehbar gelagert ist und mit seinem ausgreifenden Ende drehbar mit dem Dreieckslenker 20 verbunden ist. Durch diesen Zusatzhebel wird es möglich, eine Bestimmtheit der Bewegung des Mehrgelenks auch bei Durchgang durch eine Totpunktlage (Fig. 11) zu erreichen. Die beiden Hebel 16, 18 stehen hier derart in einer Linie, dass allein das von diesen gebildete Viergelenk nicht für die Bestimmtheit der Bewegung ausreichen würde. Mit dem Zusatzhebel 21 - oder einer anderen geeigneten Maßnahme, etwa einer Kulisse - wird somit dem eigentlichen Viergelenk ein besonders großer Schwenkwinkel ermöglicht, der den Durchgang durch Totpunktlagen einschließen kann. Die Dachbewegung kann damit an den äußeren Gegebenheiten optimiert werden, ohne dass die Mechanik dem im Wege stehen würde.

Alle drei Hebel 16, 18, 21 sind an einem gemeinsamen Hauptlager gehalten. Zumindest einer dieser Hebel kann motorisch in seiner Schwenkbewegung antreibbar sein, um dadurch die Dachbewegung zu bewirken.

Das Dach 2 kann dem hinteren Dachteil 4 vorgeordnet ein oder mehrere weitere Dachteile 22 umfassen, so dass auch ein großer Innenraum überspannt werden kann. Besonders günstig ist es dabei, wenn die relative Einklappbewegung des vorgeordneten Dachteils 22 gegenüber dem hinteren Dachteil 4 durch im Seitenbereich des hinteren Dachteils 4 gelegene aufragende Säulen 23 vermittelbar ist, wie etwa den Figuren 5 bis 8 zu entnehmen ist. Die hier C-Säulen 23 sind durch Bewegung des hinteren Dachteils 4 um seine horizontale Querachse 6 um seitliche Kanten der Heckscheibe 5 eindrehbar und legen sich mit umgekehrter Orientierung vor diese. Dabei übersetzten sie die Bewegung des hinteren Dachteils 4 zum Beispiel über eine obere und untere Anbindung jeweils mittels Kreuzgelenken in eine Steuerung der Relativbewegung des vorgeordneten Dachteils 22 gegenüber dem hinteren Dachteil 4.

## Patentansprüche

1. Cabriolet-Fahrzeug (1) mit einem eine Heckscheibe (5) umfassenden hinteren Dachteil (4), das während der Öffnungsbewegung des Daches (2) um zumindest eine - ggf. virtuelle - Achse (6) derart wendbar ist, dass die bei geschlossenem Dach (2) dem Innenraum (7) zugewandte Seite (8) der Heckscheibe (5) eine nach oben weisende Komponente aufweist,
**dadurch gekennzeichnet,**
**dass** die Achse (6) während der Dachöffnung auf einer Bahnkurve (10) beweglich ist, die eine in Fahrtrichtung (F) nach vorne führende Komponente aufweist und die Achse (6) während der Bewegung aus der geschlossenen in die offene Dachstellung zunächst aufwärts und im weiteren wieder abwärts verlagert.

2. Cabriolet-Fahrzeug (1) nach Anspruch 1,
**dadurch gekennzeichnet,**
**dass** die Erstreckung der Bahnkurve (10) in Fahrtrichtung (F) erheblich größer als die Höhendifferenz zwischen Ausgangs- und Endpunkt (13;14) der Bahnkurve (10).

3. Cabriolet-Fahrzeug (1) nach einem der Ansprüche 1 oder 2,
**dadurch gekennzeichnet,**
**dass** in jedem Moment der Dachöffnungsbewegung die Achse (6) mit einer Komponente in Fahrtrichtung (F) verlagerbar ist.

4. Cabriolet-Fahrzeug (1) nach einem der Ansprüche 1 bis 3,
**dadurch gekennzeichnet,**
**dass** der tiefste Punkt (14) der Bahnkurve (10) bei Endstellung des geöffneten Daches (2) oder in deren Nahbereich erreicht ist.

5. Cabriolet-Fahrzeug (1) nach einem der Ansprüche 1 bis 4,
**dadurch gekennzeichnet,**
**dass** die Bahnkurve (10) ein Segment eines Kreisbogens beschreibt.

6. Cabriolet-Fahrzeug (1) nach einem der Ansprüche 1 bis 5,
**dadurch gekennzeichnet,**
**dass** die Bahnkurve (10) über einen wesentlichen Teil ihrer Erstreckung oberhalb einer seitlichen Fensterbrüstungslinie der Karosserie (9) verläuft.

7. Cabriolet-Fahrzeug (1) nach einem der Ansprüche 1 bis 6,
**dadurch gekennzeichnet,**
**dass** die Achse (6) zur Bewegung des hinteren Dachteils (4) an einem gegenüber der Karosserie (9) schwenkbeweglich gehaltenen Hebel (16) gebildet ist.

8. Cabriolet-Fahrzeug (1) mit einem in sich starren, eine Heckscheibe (5) umfassenden hinteren Dachteil (4), das während der Öffnungsbewegung des Daches (2) um zumindest eine - ggf. virtuelle - Achse (6) derart wendbar ist, dass die bei geschlossenem Dach (2) dem Innenraum (7) zugewandte Seite (8) der Heckscheibe (5) eine nach oben weisende Komponente aufweist, insbesondere nach einem der Ansprüche 1 bis 7,
**dadurch gekennzeichnet,**
**dass** die Achse (6) an einem karosserieseitig beweglich gehaltenen Hebel (16) gebildet ist, der Teil eines Mehrgelenks mit zumindest einem zweiten beweglich an der Karosserie (9) gehaltenen Hebel (18) ist, wobei beide Hebel (16;18) mit ihren der karosserieseitigen Anlenkung abgewandten Kopfenden (15;17) aufeinander schlupffrei abrollen.

9. Cabriolet-Fahrzeug (1) nach einem der Ansprüche 7 oder 8,
**dadurch gekennzeichnet,**
**dass** mehreren Hebeln (16;18) zugeordnete Kopfenden (15;17) mit Verzahnungen versehen sind.

10. Cabriolet-Fahrzeug (1) nach einem der Ansprüche 7 bis 9,
**dadurch gekennzeichnet,**
**dass** die Hebel (16;18) ein Viergelenk bilden.

11. Cabriolet-Fahrzeug (1) nach einem der 7 bis 10,
**dadurch gekennzeichnet,**
**dass** ein Zusatzhebel (21)zwischen dem Hauptlager der Karosserie (9) und dem hinteren Dachteil (4) zur Bestimmung der Bewegung des Mehrgelenks bei Durchgang durch eine Totpunktlage vorgesehen ist.

12. Cabriolet-Fahrzeug (1) nach einem der Ansprüche 1 bis 11,
**dadurch gekennzeichnet,**
**dass** dem hinteren Dachteil (4) zumindest ein weiteres Dachteil (22) vorgeordnet ist und dessen Relativbewegung gegenüber dem hinteren Dachteil (4) durch im Seitenbereich des hinteren Dachteils gelegene aufragende Säulen (23) vermittelbar ist, die durch Bewegung des hinteren Dachteils (49 um seine Achse (6) eindrehbar sind und diese Bewegung des hinteren Dachteils (4) in eine Steuerung der Relativbewegung übersetzen.
